# EUROPEAN PATENT SPECIFICATION

(11) **EP 1 946 940 B1**
(45) Date of publication and mention of the grant of the patent: **24.11.2010**
(21) Application number: 08001913.6
(22) Date of filing: 04.10.2000
(51) Int. Cl.: B44F 1/10, B43K 8/12

(54) **Writing instrument for use in a toy set comprising a water-metachromatic cloth sheet**
Schreibgegenstand für Anwendung in Spielzeug mit wasser-metachromatischem Textil
Objet d'écriture pour utilisation dans un jouet comprenant un tissu ayant des propriétés métachromatiques au contact de l'eau

(30) Priority: 05.10.1999 JP 28400599
(43) Date of publication of application: 23.07.2008
(62) Divisional of application: 00308708.7
(73) Proprietor: THE PILOT INK CO., LTD., Nagoya-shi, Aichi-ken 466 (JP)
(72) Inventor: Nakashima, Akio, Nagoya-shi Aichi-ken (JP); Kani, Takao, Nagoya-shi Aichi-ken (JP)
(74) Representative: Jacob, Reuben Ellis

(56) References cited:
- EP-A- 0 776 645
- EP-A- 0 919 604
- WO-A-98/21052
- DE-A1- 4 343 880
- US-A- 4 022 211
- US-A- 4 810 562
- US-A- 5 163 846
- PATENT ABSTRACTS OF JAPAN vol. 014, no. 261 (C-0725), 6 June 1990 (1990-06-06) & JP 02 074688 A (MATSUMOTO YUSHI SEIYAKU CO LTD), 14 March 1990 (1990-03-14)

## Description

### BACKGROUND OF THE INVENTION

### Field of the invention:

This invention relates to a water-metachromatic cloth sheet, a toy set making use of the same and a writing instrument for water-metachromatic members. More particularly, it relates to a water-metachromatic cloth sheet capable of assuming different aspects depending on whether it stands dry or stands wet with water, a toy set making use of such a sheet, and a convenient writing instrument for water-metachromatic members which enable formation of any desired handwriting images by means of water, on water-metachromatic members capable of assuming such alternately changeable aspects.

In the present invention, a white or colored opaque sheet turns colorless or transparent, and vice versa, depending on whether it is dry or wet. This is also regarded as a change in color, i.e., metachromatism.

### Related Background Art :

Sheets comprising a support and provided thereon a porous layer containing a pigment having a low refractive index, to the porous layer of which water is made to adhere to make it transparent to cause an image to appear, are conventionally known as disclosed in Japanese Patent Publications No. Sho50-5097 and No. Hei5-15389.

As fields to which such sheets are chiefly applied, they are conventionally applied to practice of calligraphy, image appearing-disappearing toys and so forth, and are mostly comprised of paper as the support or substrate, having a poor durability.

U.S. Patent No. 5,163,846 discloses a water-reactive sheet of this type and a water pen with which one can write on the sheet, but does not disclose any specific construction of water pens that can satisfy practical usability.

### SUMMERY OF THE INTENTION

The present inventors have discovered that a cloth having a specific weight per unit area may be used as a support, and a porous layer formed of a mixture of a pigment having a specific low refractive index with a binder resin in a specific proportion may be formed on the surface of the support, whereby sharp through-view images can be made to appear and also the shortage in durability in the prior art can be eliminated.

An object of the present invention is to provide a water-metachromatic cloth sheet having superior flexural strength, scratch resistance, water resistance and so forth, which is usable as a general-purpose water-metachromatic writing sheet as a matter of course and also as a water-metachromatic sheet having an area large enough for infants or someone else to step thereon to form water-metachromatic images as desired, and is also applicable to fields of toys such as doll clothing and stuffed toy's skin materials, fields of swimsuit and other fields of artificial flowers, umbrellas, raincoats, rainproof shoes and so forth.

Another object of the present invention is to provide a toy set used in combination with a water-providing means having the form of a stamp or the form of a writing instrument, which can form water-metachromatic images on the above water-metachromatic sheet.

Still another object of the present invention is to provide a writing instrument with which a sharp water image can be formed while water is allowed to flow out in an appropriate quantity in accordance with writing speed and also which can show a proper-quantity water flow-out performance even in writing in the state where the pen point is kept upward or kept sideway.

A further object of the present invention is to provide as the above writing instrument a writing instrument for water-metachromatic members which is readily suppliable with water and satisfies practical usability.

To achieve the above objects, the present invention provides a writing instrument for water-metachromatic members as defined in the claims

The writing instrument for warter-metachromatic members can be used to form desired writing image by means of water on a water-metachromatic member comprising a support and provided on the surface thereof a porous layer formed of a binder resin to which fine-particle silicic acid stands fixed dispersedly, and capable of rendering different transparency between a liquid-absorbed state and a liquid-unabsorbed state.

### BRIEF DESCRIPTION OF THE DRAWINGS

Fig. 1 is an enlarged vertical sectional illustration of an example of the water-metachromatic cloth sheet according to the present invention.
Fig. 2 is an enlarged vertical sectional illustration of another example of the water-metachromatic cloth sheet according to the present invention.
Fig. 3 is an enlarged vertical sectional illustration of still another example of the water-metachromatic cloth sheet according to the present invention.
Fig. 4 is an enlarged vertical sectional illustration of a further example of the water-metachromatic cloth sheet according to the present invention.
Fig. 5 is an illustration of how the water-metachromatic cloth sheet according to the present invention is used.
Fig. 16 is a vertical sectional view showing a first example of a writing instrument according to a second embodiment of the present invention.
Fig. 17 is an enlarged cross-sectional view along the line D-D in Fig. 16.
Fig. 18 is an enlarged cross-sectional view along the line E-E in Fig.16.
Fig. 19 is an enlarged cross-sectional view along the line F-F in Fig. 16.
Fig. 20 is an enlarged cross-sectional view along the line G-G in Fig. 16.
Fig. 21 is an enlarged cross-sectional view along the line H-H in Fig. 16.

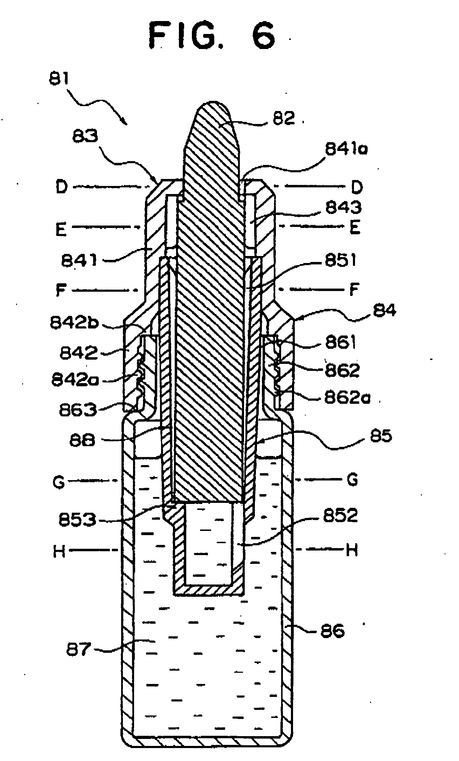

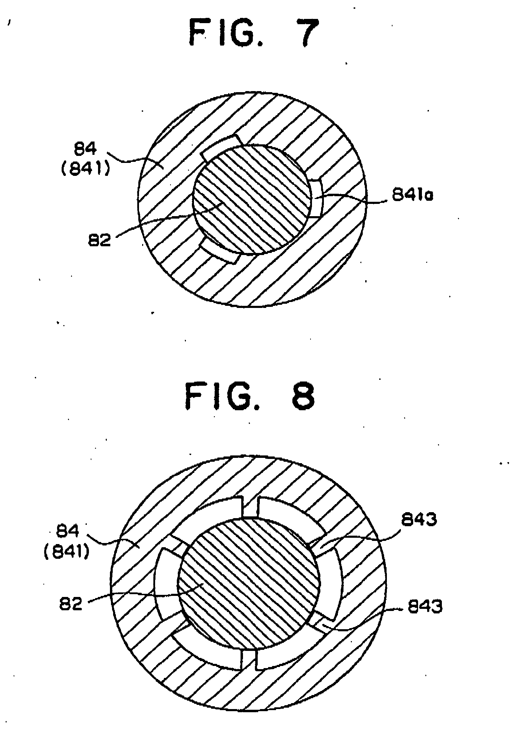

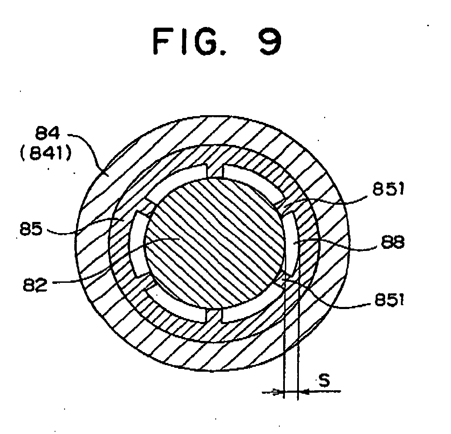

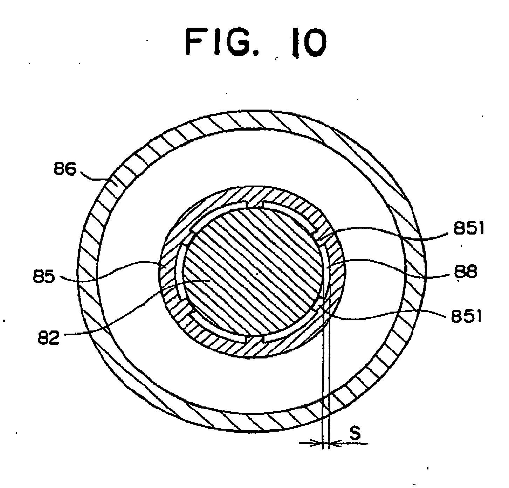

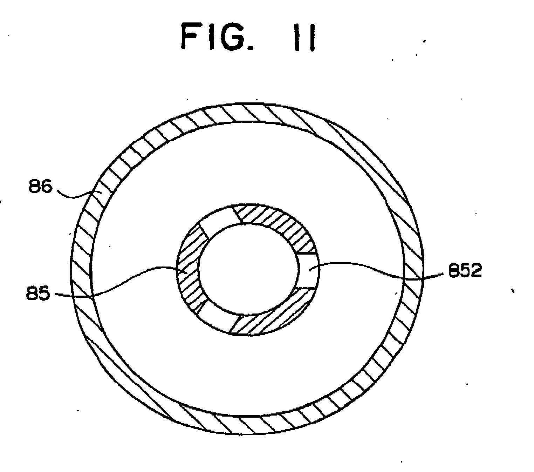

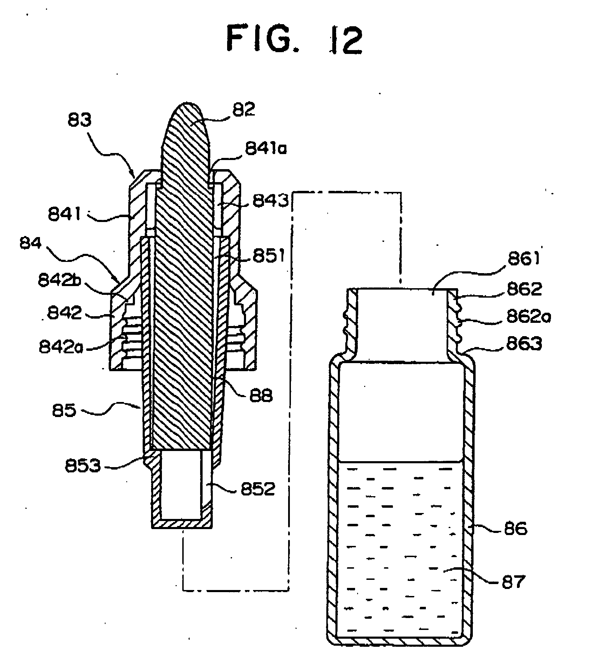

Fig. 22 is a vertical sectional view showing how the writing instrument shown in Fig. 6 stands when its holder is detached from a container.

### DESCRIPTION OF THE REFERRED EMBODIMENT

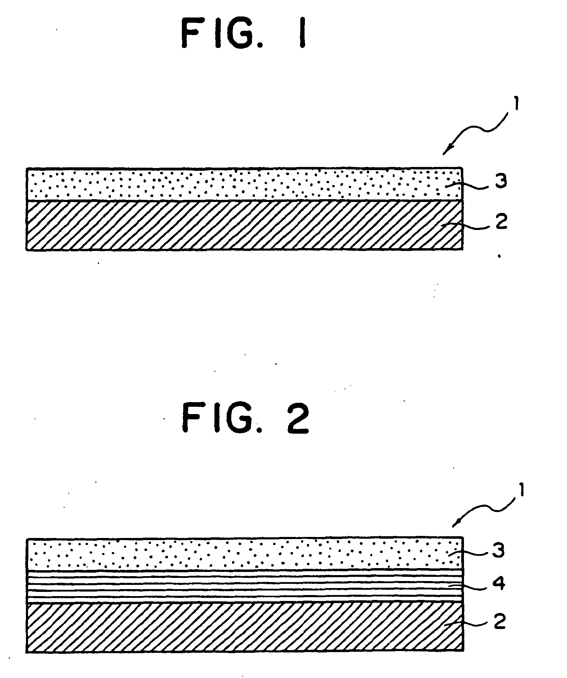

The water-metachromatic cloth sheet of the present invention will be described below in detail with reference to the accompanying drawings (Figs. 1 to 5).

A water-metachromatic cloth sheet 1 is a water-metachromatic cloth sheet which comprises basically a support or substrate 2 and provided on the surface thereof a porous layer 3 formed of a binder resin to which fine-particle silicic acid stands fixed dispersedly, and is capable of rendering different transparency between a liquid-absorbed state and a liquid-unabsorbed state, and is **characterized in that** the support 2 is a cloth having a weight per unit area of 30 g/m² to 1,000 g/m², the fine-particle silicic acid is held in the porous layer 3 in an amount of from 1 g/m² to 30 g/m². and the fine-particle silicic acid is incorporated in an amount ranging from 0.5 part by weight to 2 parts by weight based on 1 part by weight of the binder resin.

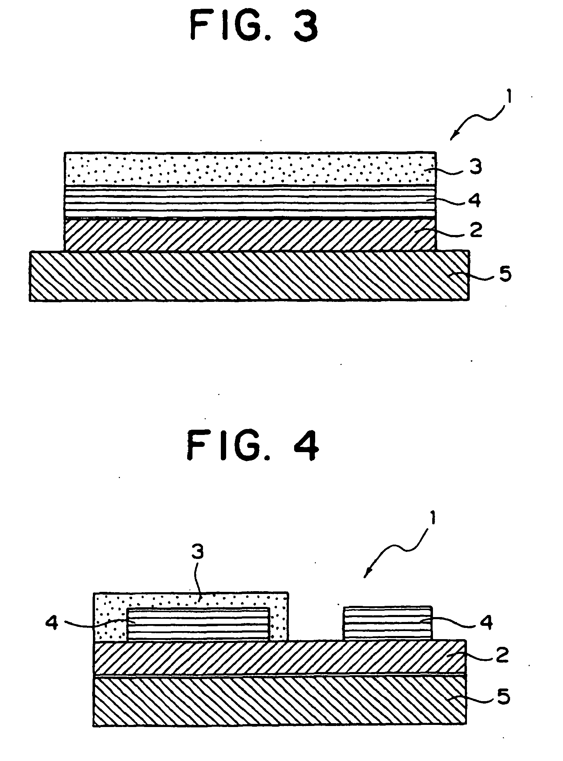

In a preferred embodiment, the fine-particle silicic acid may be a silicic acid having a particle diameter of from 0.03 µm to 10 µm, produced by a wet process and having a two-dimensional structure. The binder resin may be polyurethane resin. A colored layer 4 may further be provided as a lower layer or an upper layer of , or in the vicinity of, the porous layer (Fig. 2). A water-impermeable sheet material 5 may further be provided on the back of the cloth (Fig.3). The water-impermeable sheet material 5 may be a sheet with a thickness of from 1 µm to 3 mm, made of a material selected from a soft thermoplastic resin and a thermoplastic elastomer. The cloth may be a quadrilateral having a side of at least 50 cm or longer.

The fine-particle silicic acid may be one produced by a dry process, but the fine-particle silicic acid produced by a wet process (hereinafter "wet-process fine-particle silicic acid") is particularly effective and satisfies practical usability.

This fine-particle silicic acid will be detailed below.

The fine-particle silicic acid is produced as noncrystalline, amorphous (amorphous-powder) silicic acid. According to its production process, it is roughly grouped into a dry-process product obtained by gaseous phase reaction such as thermal decomposition of a silicon halide such as silicon tetrachloride (hereinafter "dry-process fine-particle silicic acid") and a wet-process fine-particle silicic acid obtained by liquid phase reaction such as decomposition of sodium silicate with an acid. In order to obtain the function as an opacifying or hiding porous layer as intended in the present invention, the wet-process fine-particle silicic acid is most preferred. This is because the wet-process fine-particle silicic acid and the dry-process fine-particle silicic acid differ in structure from each other. The dry-process fine-particle silicic acid forms a three-dimensional structure as shown below in which silicic acid molecules stand combined closely; 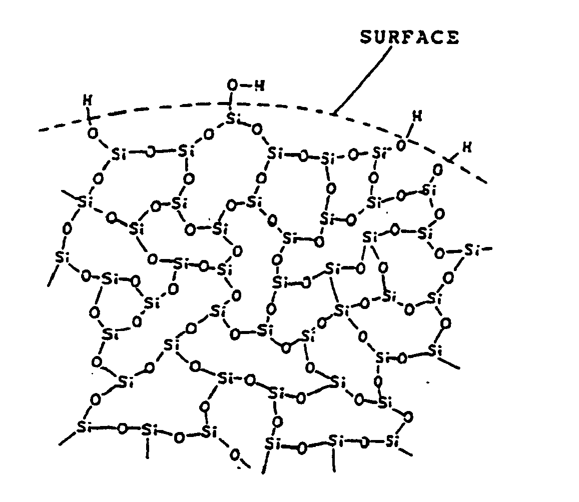 whereas the wet-process fine-particle silicic acid has what is called two-dimensional structure moiety as shown below in which silicic acid is condensed to form a long molecular arrangement. 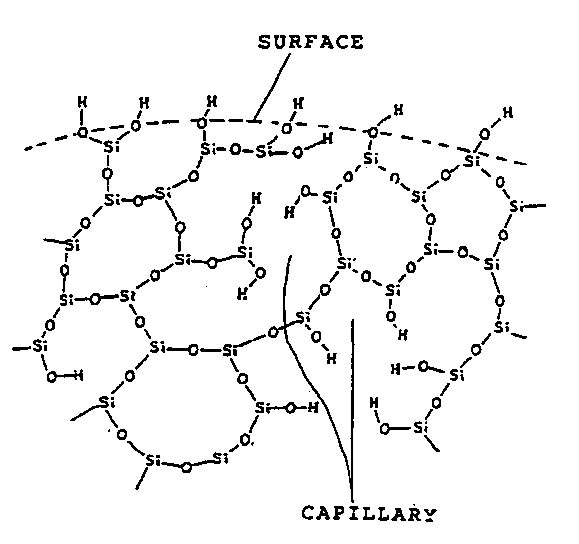 Thus, the wet-process fine-particle silicic acid has a coarser molecular structure than the dry-process fine-particle silicic acid, and hence, when used in the porous layer, the wet-process fine-particle silicic acid can provide superior irregular light reflection properties compared with a system making use of the dry-process fine-particle silicic acid, bringing about a great hiding performance in a normal condition, as so presumed.

Water is absorbed in the above porous layer 3 in the present invention. Accordingly, the wet-process fine-particle silicic acid is preferably used also because it has more hydroxyl groups present on particle surface as silanol groups than the dry-process fine-particle silicic acid, and has a greater degree of hydrophilicity.

Incidentally, in order to adjust the hiding performance in normal condition and the transparency in liquid-absorbed condition of the porous layer, any of other general-purpose pigments having a low refractive index may also be used in combination with the wet-process fine-particle silicic acid.

In order to satisfy both the hiding performance in normal condition and the transparency in liquid-absorbed condition, the wet-process fine-particle silicic acid in the porous layer 3 may preferably be in a coating weight of from 1 g/m² to 30 g/m², and more preferably from 5 g/m² to 20 g/m², which may depend on its physical properties such as particle diameter, specific surface area and oil absorption. If it is less than 1 g/m², it is difficult to obtain a sufficient hiding performance in normal condition. If on the other hand it is more than 30 g/m², it is difficult to obtain a sufficient transparency in liquid-absorbed condition.

There are no particular limitations on the particle diameter of the fine-particle silicic acid. Those having a particle diameter of from 0.03 to 10.0 µm may preferably be used.

The fine-particle silicic acid is dispersed in a vehicle containing a binder resin as a binding agent, and the dispersion obtained is coated on the support 2, followed by drying to evaporate a volatile component to form the porous layer 3.

The binder resin may include urethane resins, nylon resins, viny acetate resins, acrylate resins, acrylate copolymer resins, acryl polyol resins, vinyl chloride-vinyl acetate copolymer resins, maleic acid resins, polyester resins, styrene resins, styrene copolymer resins, polyethylene resins, polycarbonate resins, epoxy resins, styrene-butadiene copolymer resins, acrylonitrile-butadiene copolymer resins, methyl methacrylate-butadiene copolymer resins, butadiene resins, chloroprene resins, melamine resins, and emulsions of these resins, as well as casein, starch, cellulose derivatives, polyvinyl alcohol, urea resins, and phenolic resins.

The fine-particle silicic acid and any of these binder resins may be mixed in such a proportion that the binder resin is in a solid content of from 0.5 to 2 parts by weight, and more preferably from 0.8 to 1.5 parts by weight, based on 1 part by weight of the fine-particle silicic acid, which depends on the type and properties of the fine-particle silicic acid. If the binder resin solid content is less than 0.5 part by weight based on 1 part by weight of the fine-particle silicic acid, it is difficult to obtain a practical film strength of the porous layer. If it is more than 2 parts by weight, the porous layer may have a poor permeability for water.

The porous layer 3 has a smaller mixing proportion of the binder resin to a colorant than conventionally known commonly available coating films, and hence it is difficult to attain a sufficient film strength. Accordingly, in order to improve anti-scratch strength, it is effective to use, among the above binder resins, nylon resins or urethane resins, or to use either of them in combination with other resin.

The urethane resins include polyester type urethane resins, polycarbonate type urethane resins and polyether type urethane resins. Two or more types of these may be used in combination. Also usable are urethane type emulsion resins prepared by emulsifying and dispersing any of the above resins in water, and colloidal dispersion type (ionomer type) urethane resins dissolved or dispersed in water by self-emulsification without requiring any emulsifier on account of ionic groups of urethane resin itself (urethane ionomer) having ionic properties.

As the above urethane type resins, either of water-soluble urethane resins and oil-soluble urethane resins may be used. Preferably usable in the present invention are water-soluble urethane resins, in particular, urethane type emulsion resins and colloidal dispersion type urethane resins.

The urethane resins may be used alone or in combination. Other binder resins may also be used in combination, in accordance with the type of the support or the performance required in films. In the case when a binder resin other than the urethane resin is used, the urethane resin may preferably be incorporated in the binder resin of the porous layer in an amount of 30% or more as weight ratio of solid content.

In the above binder resins, those which are cross-linkable may be cross-linked by adding any desired cross-linking agent, whereby the film strength can further be improved.

The binder resins differ in extent of their affinity for water. Those having such different affinity may be used in combination. This enables adjustment of the time and degree of permeation of water into the porous layer or the rate of drying after permeation. Such adjustment can be controlled by further adding a dispersant.

In the porous layer 3, a conventionally known metalescent pigment such as titanium-dioxide-coated mica, iron-oxide/titanium-dioxide-coated mica, iron-oxide-coated mica, guanine, sericite, basic lead carbonate, acid lead arsenate or bismuth oxychloride may be added or a common dye or pigment, a fluorescent dye or a fluorescent pigment may be mixed so that changes in color can be made rich in variety.

A conventionally known reversible metachromatic pigment, which is capable of changing in color upon temperature changes, may also be mixed so that color can be changed by environmental temperature or temperature of the water to be provided.

The colored layer 4 may further be provided as mentioned previously, as a lower layer or an upper layer of, and/or in the vicinity of, the porous layer 3 so that the changes in aspects can further be made rich in variety.

The porous layer 3 and the colored layer 4 are by no means limited to solid-printed layers, and may also be images such as characters, symbols and designs.

The porous layer 3 and the colored layer 4 may appropriately be formed by conventionally known means as exemplified by printing means such as screen printing, offset printing, gravure printing, pad printing and transfer, and coating means such as brush coating, spray coating, electrostatic coating, electrodeposition coating, cast coating, roller coating and dip coating.

As the support 2, it is required to use a cloth such as woven fabric, knit or nonwoven fabric. Stated more specifically, it is required to use a cloth having a weight per unit area ranging from 30 g/m² to 1,000 g/m², preferably from 30 g/m² to 500 g/m². In a system where the weight per unit area is smaller than 30 g/m², water may be absorbed non-uniformly and insufficiently to make it difficult to form sharp through-view images. On the other hand, in a system where it is larger than 1,000 g/m², the cloth has so excessively large a section thickness that it may be folded with difficulty when put away or may no longer be light-weight in a system where the sheet itself has a large area, and also that such a cloth is economically disadvantageous.

Of the above cloths, woven fabric may preferably be used as having a good smoothness, in view of an advantage that the porous layer 3 can uniformly be formed.

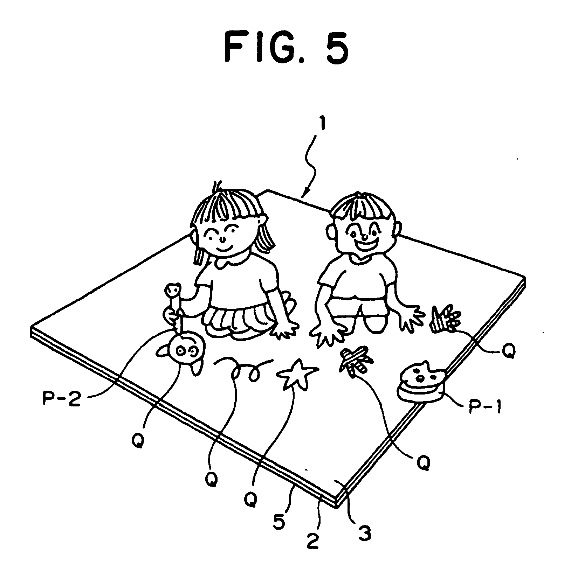

Use of such a cloth promises a richer water absorption and enables quicker formation of sharper through-view images Q (Fig. 5) more easily than systems where conventional paper is used as a support, and besides may cause no lowering of strength when water is absorbed. In a system where a sheet with a large area is made up, such a cloth can be folded with ease when put away.

On the back of the cloth sheet 1, a water-impermeable sheet material 5 with a thickness of from about 1 µm to about 3 mm may be bonded, sewed, or provided by any other means in close attachment so as to be in the form of a laminate (Fig. 5). Such a sheet material 5 may be comprised of a softened plastic of, e.g., a polyolefin resin or a vinyl chloride resin obtained by blending a plasticizer, or a thermoplastic elastomer of, e.g., a styrene type, urethane type, polyester type, polyamide type, polybutadiene type or fluorine type.

In the foregoing, a water-impermeable sheet material having a thickness smaller than 1 µm may have an insufficient durability. On the other hand, one having a thickness larger than 3 mm may be folded with difficulty.

Where the water-impermeable sheet material 5 is provided on the back of the cloth, any contamination due to leakage of water through the back of the sheet can be prevented when water is dropped on the sheet surface by accident or water is supersaturatedly absorbed, and also it can function as slip-proofing.

Thus, a toy-purpose water-metachromatic cloth sheet 1 can be made up which sheet itself may have an area large enough for infants or someone else to step thereon to play, i.e., may be a quadrilateral having a side of at least 50 cm or longer so that infants or someone else can repeatedly form water images in variety, and which satisfies durability and allows playing without anxiety while avoiding any troubles of contamination due to water.

Second, the present invention is characterized by a water-metachromatic toy set comprising the water-metachromatic cloth sheet 1 described above and a water-providing means P which make a set (see Fig. 5).

As examples of the water-providing means P, it may include a means of a stamp type (P-1) comprising a synthetic resin porous member having open cells or a fibrous worked member, which serve as a water-absorptive element, and having an image such as a design, characters or symbols on the stamp surface, and a means of a writing instrument type (P-2) comprising the above synthetic resin porous member or fibrous worked member, used as a pen point member.

A writing instrument 81 having structure as shown in Figs. 16 to 22 can be exemplified. It comprises a holder 83 for holding a pen point 82, and a container 86 capable of holding water directly in the interior. A pour opening 861 from which water is poured into the container 86 is formed at an end of the container 86, and also the holder 83 is so made as to be detachably fitted to the pour opening 861. The holder 83 is fitted to the pour opening 861, thus the interior of the container is hermetically closed.

In the writing instrument 81, the holder 83 has a cylindrical pen point holder 85 which holds the pen point 82 along its outer surface, and the pen point holder 85 is inserted from the pour opening 861 to the interior of the container and disposed therein. Between the outer surface of pen point 82 and the inner surface of the pen point holder 85, a gap 88 may be provided through which the interior of the container 86 communicates with the exterior of the container 86 and with which the water is held by capillary force.

In the system formed in the writing instrument 81, when water 87 is poured into the container 86, the holder is detached from the container 86 at its pour opening 861 to make the pour opening 861 open upward, where the water 87 is poured from the pour opening 861. Thereafter, the holder 83 having the pen point 82 is fitted to the pour opening 861, thus the pour opening 861 is closed up and the interior of the container 86 is hermetically closed. Thus, in the course of pouring the water 87 into the container, there is no possibility that the water 87 leak outside. Also, the holder 83 having the pen point 82 functions also as a cover of the container 86, and hence the number of parts of the whole writing instrument can be smaller, so that a simple structure can be provided.

Here, in the structure where the holder 83 has the cylindrical pen point holder 85 which holds the pen point 82 along its outer surface, and the pen point holder 85 is inserted from the pour opening 861 to the interior of the container and disposed therein, the distance between the part holding the water 87 i'n the container 86 and the pen point 82 can be set shorter than in the case of a construction where the pen point holder 85 is fitted outside the container 86 (construction different from that of the present invention). Hence, the water 87 can be supplied to the pen point 82 quickly and smoothly and at the same time the whole writing instrument can be set compact. Moreover, in the construction where the gap 88 through which the interior of the container 86 communicates with the exterior of the container 86 and with which the water is held by capillary force is provided between the outer surface of pen point 82 and the inner surface of the pen point holder 85, the gap 88 holds temporarily the water 87 overflowed out of the container 86 when the internal pressure of the container 86 increases as a result of a temperature change or the like. At the same time, since it holds the water 87, it keeps the air from flowing in from the outside and allows the air to flow into the container 86 to an extent corresponding to the volume produced upon decrease in the inner pressure of the container 86 as the water 87 is consumed.

More specifically, the gap 88 brings about no possibility that the water 87 leaks through the pen point 82 even when the internal pressure of the container 86 increases as a result of a temperature change or the like. Also, even when the inner pressure of the container 86 decreases as the water 87 is consumed, the air is always kept flowing in neither more nor less, and hence the water can stably and continuously be coated without oversupply or shortage of supply of the water 87 to the pen point 82. Accordingly, it is no longer necessary to provide a complicated structure for any valve mechanism for controlling the flow-out of the water 87 and the flow-in of the air, so that the whole writing instrument can be made simple in structure and the production cost can be kept low.

The gap 88 may further preferably be so set that its width size S (Figs. 19 and 20) in the diameter direction becomes smaller as it extends rearwards. This makes the capillary force at the gap 88 gradually greater as the gap extends rearwards. Thus, where the internal pressure of the container 86 has increased, the water 87 overflowed out of the container 86 is temporarily kept held in the the gap from it s rear end toward the front. On the other hand, where the internal pressure of the container 86 has decreased, the water 87 held temporarily in the gap 88 is successively smoothly returned to the container 86 without interruption, beginning with the water 87 at the end portion of the gap 88.

Moreover, since the capillary force at the gap 88 is so set as to be stronger at its rear portion than at its front portion, a liquid-sealing zone is formed there with which the water 87 is always held and the flow of the air into the container 86 is controlled.

More specifically, since the width S in the diameter direction of the gap 88 is so set smaller as it extends rearwards, the pressure control mechanism (i.e., the function to control the flow of the air into the container 86 and the function to hold the water 87 temporarily) can effectively be exhibited.

### EXAMPLES

The present invention will be described below in greater detail by giving Examples.

In the following, "part(s)" is by weight unless particularly noted.

### Example 1

A pink-colored polyester satin cloth with a weight per unit area of 90 g/m² was used as the support 2. On its whole surface, a white screen printing ink prepared by uniformly mixing and stirring 15 parts of wet-process fine-powder silica (trade name: NIPSIL E-200; available from Nippon Silica Industrial Co., Ltd.), 30 parts of a urethane emulsion (trade name: HYDRAN HW-930; available from Dainippon Ink & Chemicals, Incorporated; solid content: 50%), 50 parts of water, 0.5 part of a silicone type anti-foaming agent, 3 parts of a water-based ink thickening agent, 1 part of ethylene glycol and 3 parts of a blocked isocyanate type cross-linking agent was solid-printed using a 80-mesh screen plate, followed by drying at 130°C for 5 minutes to harden to form the porous layer 3, thus a rectangular water-metachromatic cloth sheet of 1 m x 1.5 m was obtained (see Fig. 1).

In the water-metachromatic cloth sheet 1 the pink color of the support 2 stood hidden in a normal condition, and the sheet was visually perceived as a white porous layer 3 over the whole surface.

The palm of a hand wetted with water was pressed against the water-metachromatic cloth sheet 1, whereupon the porous layer 3 turned transparent at that part, and a pink image Q corresponding to the palm of a hand was visually perceivable.

The pink image returned to the original white when the porous layer 3 became dry, and the image became invisible.

### Example 2

A white-colored nylon taffeta cloth with a weight per unit area of 45 g/m² was used as the support 2. On its whole surface, a green screen printing ink prepared by uniformly mixing and stirring 5 parts of a green pigment (trade name: SANDYE SUPER GREEN LXB; available from Sanyo Color Works, Ltd.), 50 parts of an acrylate emulsion (trade name: MOVINYL 763; available from Hoechst Gosei K.K.; solid content: 48%), 3 parts of a water-based ink thickening agent, 0.5 part of a leveling agent, 0.3 part of an anti-foaming agent and 5 parts of an epoxy type cross-linking agent was solid-printed using a 180-mesh screen plate, followed by drying at 100°C for 3 minutes to harden to form the colored layer 4.

Next, on the whole surface of the colored layer 4, a yellow screen printing ink prepared by uniformly mixing and stirring 15 parts of wet-process fine-powder silica (trade name: NIPSIL E-200; available from Nippon Silica Industrial Co., Ltd.), 1 part of a yellow pigment (trade name: SANDYE SUPER YELLOW 10GS; available from Sanyo Color Works, Ltd.), 45 parts of a urethane emulsion (trade name: HYDRAN AP-20; available from Dainippon Ink & Chemicals, Incorporated; solid content: 30%), 40 parts of water, 0.5 part of a silicone type anti-foaming agent, 3 parts of a water-based ink thickening agent, 1 part of ethylene glycol and 3 parts of a blocked isocyanate type cross-linking agent was solid-printed using a 100-mesh screen plate, followed by drying at 130°C for 5 minutes to harden to form the porous layer 3, thus a rectangular water-metachromatic cloth sheet 1 of 1 m x 1.5 m was obtained (see Fig. 5).

In the water-metachromatic cloth sheet 1, the yellow porous layer 3 was visually perceived in a normal condition. Characters were written on that sheet, whereupon the porous layer 3 turned transparent at that part, and green characters were visually perceivable.

The green characters became invisible when the porous layer 3 became dry, and the sheet returned to the original yellow phase.

### Example 3

A white cotton satin cloth with a weight per unit area of 130 g/m² to the back of which a urethane elastomer sheet of 3 µm thick had been bonded was used as the support 2. On its surface, a fluorescent pink ink prepared by uniformly mixing and stirring 5 parts of a fine-powder fluorescent pink pigment (trade name: EPOCOLOR FP-112; available from Nippon Syokubai Co., Ltd.), 50 parts of an acrylate emulsion (trade name: MOVINYL 763; available from Hoechst Gosei K.K.; solid content: 48%), 3 parts of a water-based ink thickening agent, 0.5 part of a leveling agent, 0.3 part of an anti-foaming agent and 5 parts of an epoxy type cross-linking agent was solid-printed using a 180-mesh screen plate, followed by drying at 100°C for 3 minutes to harden to form the colored layer 4. Thereafter, on this colored layer 4, a white screen printing ink prepared by uniformly mixing and stirring 15 parts of wet-process fine-powder silica (trade name: NIPSIL E-200; available from Nippon Silica Industrial Co. , Ltd.), 30 parts of a urethane emulsion (trade name: HYDRAN HW-930; available from Dainippon Ink & Chemicals, Incorporated; solid content: 50%), 50 parts of water, 0.5 part of a silicone type anti-foaming agent, 3 parts of a water-based ink thickening agent, 1 part of ethylene glycol and 3 parts of a blocked isocyanate type cross-linking agent was solid-printed using a 80-mesh screen plate, followed by drying at 130°C for 5 minutes to solidify to form the porous layer 3 in white, thus a water-metachromatic cloth sheet 1 was obtained (see Fig. 3).

Incidentally, in the vicinity of the porous layer 3 of the sheet, indications by common printing ink, such as characters, messages and deigns, can be provided so as to impart commercial utility and design decoration.

The above water-metachromatic cloth sheet 1 stands white on the whole in a normal condition. Any desired pink through-view images can be formed to visually perceive, by means of a marker (pen) fitted with a fibrous worked pen member, or by applying the water-providing means P such as a sponge cut in a toy elephant.

### Example 4

Using a support 2 prepared by providing a urethane sheet of 3 µm thick on the back of the white cotton satin cloth as used in Example 3, a colored layer 4 was formed by coating the fluorescent pink ink as used in Example 3 and also another colored layer 4 was provided in a pattern using a common printing ink to obtain a water-metachromatic cloth sheet 1 (see Fig. 4).

The sheet 1 prevented any contamination due to exudation or leakage of water through the back of the sheet even when water was dropped on the sheet surface by accident or the cloth became supersaturated with water.

Examples of the writing instrument are given bellow.

### Example 5

An example of the writing instrument 81 is given here (see Figs. 16 to 22).

The writing instrument 81 consists basically of a pen point 82, a holder 83 to which the pen point 82 has been fixed, and a container 86 to which the holder 83 is detachably fitted.

The pen point 82 is a rod-like resin worked member of a fiber bunch (e.g., a resin worked member of polyester fibers or polyamide fibers). It has a tip tapering to the end and also a smoulder is formed between the tip and its rearward-lying outer surface of the pen point 82.

The container 86 is a bottomed casing at the front end of which a pour opening 861 is opened and the rear end of which is closed. It can be obtained by blow molding of a synthetic resin (e.g., polyethylene terephthalate resin). At the front end of the container 86, a constriction 862 is formed and also a shoulder 863 is formed at the boarder of the constriction 862 and its rearward-lying outer surface of the container 86. An external thread 862a is also provided at the outer surface of the constriction 862 of the container 86. Water 87 is directly held in the container 86.

The holder 83 is a double-wall cylindrical body consisting of an outer cylinder 84 having a frontward small-diameter portion 841 and a rearward large-diameter portion 842 and an inner cylinder 85 the outer surface at the front end portion of which is fixed by press-fitting or bonding to the inner surface of the outer cylinder 84 (i.e., the inner surface of the small-diameter portion 841). Both the outer cylinder 84 and the inner cylinder 85 can be obtained by injection molding of a synthetic resin (e.g., ABS resin). At the inner surface of the large-diameter portion 842 of the outer cylinder 84, an internal thread 842a is provided which is engageable with the external thread 862a provided at the outer surface of the front end portion of the container 86, and also a circular terrace 842b is formed at the front part of the internal thread 842a formed at the inner surface of the large-diameter portion 842 of the outer cylinder 84. The inner cylinder 85 is a bottomed cylinder having a bottom at its rear end, and the rear portion is projected rearward from the rear end of the outer cylinder 84.

The holder 83 is fitted to the pour opening 861 of the container 86, where the inner surface (the internal thread 842a) of the outer cylinder 84 is engaged with the outer surface of the constriction 862 (the external thread 862a) of the container 86, and also the rear end of the outer cylinder 84 is brought into contact with the shoulder 863 of the container 86. At the same time, the inner cylinder 85 is loosely inserted to the interior of the container 86 from the pour opening 861, and also the circular terrace 842b at the inner surface of the outer cylinder 84 and the opening end of the pour opening 861 are brought into close contact with each other. Thus, the water 87 is prevented from leaking outside. Also, when the water 87 is supplied (poured) into the container 86 or when the water 87 is discharged out of the container 86, the holder 83 is detached from the container 86. Thus, the state of close contact between the circular terrace 842b of the outer cylinder 84 and the opening end of the pour opening 861 is released.

As shown in Figs. 19 and 20, at the inner surface of the inner cylinder 85 of the holder 83 (i.e., the inner surface of the pen point holder), a plurality of ribs 851 (six ribs here) extending in the axial direction are provided at equal intervals. The ribs 851 brings the pen point 82 into press-fit hold at its outer surface, and this keeps the pen point 82 from tottering in the diameter direction to enable stable coating or writing. Moreover, since the ribs 851 bring the pen point 82 into press-fit hold at its outer surface, gaps 88 extending in the axial direction, having a capillary force, are formed between the outer surface of the pen point 82 and the inner surface of the inner cylinder 85 in mutual spaces of the ribs 851 adjacent to each other.

The ribs 851 projecting from the inner surface of the inner cylinder 85 are so set as to project in the diameter direction in an extent that becomes smaller toward the rear. Thus, the width S of the gaps 88 in the diameter direction is so set as to become gradually smaller toward the rear. As the result, the capillary force of the gaps 88 is set to become gradually greater toward the rear. Here, stated specifically, the width S in the diameter direction of the gaps 88 is set at 0.3 mm for the one shown in Fig. 19, and 0.15 mm for the one shown in Fig. 20.

The inner cylinder 85 also has a constricted rear end portion. A plurality of communicating holes 852 (three holes here) are made in the sidewall at the rear end portion (Fig., 21) so that the interior of the container 86 communicates with the interior of the inner cylinder 85 (i.e., the rear end of the pen point 82 communicates with the gaps 88) via the communicating holes 852. At the inner surface at a position slightly forward from the rear end of the inner cylinder 85, a stopper rib 853 is provided adjoiningly to the sidewall of the inner cylinder 85 at its rear end portion. The stopper rib 853 comes into contact with the rear end of the pen point 82.

At the front end of the small-diameter portion 841 of the holder 83, a front end opening 841a is also provided, and the front end portion of the pen point 82 is projected therefrom. Also, an air hole is formed between the inner surface of the front end opening 841a and the outer surface of the front end portion of the pen point 82.

The pen point 82 also has, at the rearward outer surface of its front end portion, an outer diameter set slightly larger than the inner diameter of the front end opening 841a so that the pen point 82 can be prevented from coming off from the holder 83. Still also, the pen point 82 is, at the rearward outer surface of its front end portion, held with a plurality of holding ribs 843 (six ribs here) provided at the inner surface of the small-diameter portion 841, thus an air flow path is formed between it and the inner surface of the small-diameter portion 841.

In the above example, the gaps 88 formed between the inner surface of the pen point holding member and the outer surface of the pen point 82 are formed by the ribs 851 provided at the inner surface of the pen point holding member of the holder 83, but may be formed in a different manner, e.g., by ribs (or grooves) provided at the outer surface of the pen point 82.

## Claims

1. A writing instrument (81) for water-metachromatic members with which writing instrument any desired writing image is formed by means of water on a water-metachromatic member comprising a support and provided on the surface thereof a porous layer formed of a binder resin to which fine-particle silicic acid stands fixed dispersedly, and capable of rendering different transparency between a liquid-absorbed state and a liquid-unabsorbed state;
said writing instrument (81) comprises a holder (83) which holds a pen point (82) formed of a synthetic resin porous member or fibrous worked member, and a container (86) capable of holding water directly in its interior; and
a pour opening from which water is poured into the container being provided at the front end of the container, and said holder being constructed as to be detachably fitted to the pour opening;said writing instrument being **characterised in that**
the interior of said container (86) being hermetically closed when said holder is fitted to said pour opening; said holder comprising a cylindrical pen point holding member (85) capable of holding the pen point (82) at an outer surface thereof;
said cylindrical pen point holding member (85) being inserted from said pour opening and disposed in said container,
and a gap (88) being provided between the outer surface of said pen point (82) and the inner surface of said pen point holding member (85), the gap being a gap through which the interior of said container communicates with the exterior of said container and at which the water is held by the aid of a capillary force.

2. The writing instrument for water-metachromatic members according to claim 1, wherein the width of the gap (88) in the diameter direction is set to become gradually smaller toward the rear end of the container.

## Patentansprüche

1. Schreibgerät (81) für wassermetachromatische Gegenstände, wobei mit dem Schreibgerät ein gewünschtes Schriftbild mit Hilfe von Wasser auf einem wassermetachromatischen Gegenstand gebildet wird, der einen Träger umfasst und auf dessen Oberfläche eine poröse Schicht, die aus einem Binderharz gebildet ist, an dem Feinpartikel-Kieselsäure verteilt fest steht, und der imstande ist, unterschiedliche Transparenz zwischen einem Flüssigkeitsabsorptionszustand und einem Nicht-Flüssigkeitaabsorptionazustand bereitzustellen;
wobei das Schreibgerät (81) eine Halterung (83) umfasst, die eine Stiftspitze (82) hält, die aus einem porösen Element aus synthetischem Harz oder einem faserigen bearbeiteten Element gebildet ist, und einen Behälter (86), der Wasser direkt in seinem Inneren halten kann; und
eine Gießöffnung, aus der Wasser in den Behälter gegossen wird, die an dem vorderen Ende des Behälters bereitgestellt ist, und wobei die Halterung so konstruiert ist, dass sie lösbar an der Gießöffnung angebracht ist, wobei das Schreibgerät **dadurch gekennzeichnet ist,**
**dass** das Innere des Behälters (86) hermetisch geschlossen ist, wenn die Halterung an der Gießöffnung befestigt ist; wobei die Halterung ein zylindrisches Stiftspitzen-Halterungselement (85) umfasst, das imstande ist, die Stiftspitze (82) an einer äußeren Oberfläche davon zu halten;
wobei das zylindrische Stittepitzen-Halterungselement (85) von der Gießöffnung eingesetzt und in dem Behälter angeordnet wird;
und **dass** ein Spalt (88) zwischen der äußeren Oberfläche der Stiftspitze (82) und der inneren Oberfläche des Stiftspitzen-Halterungselements (85) bereitgestellt ist, wobei der Spalt ein Spalt ist, durch den das Innere des Behälters mit der Außenseite des Behälters in Verbindung steht, und an dem das Wasser mit Hilfe einer Kapillarkraft gehalten wird.

2. Schreibgerät für wassermetachromatische Gegenstände nach Anspruch 1, wobei die Breite des Spaltes (88) in Durchmesserrichtung so bestimmt ist, dass er zum hinteren Ende des Behälters schrittweise kleiner wird.

## Revendications

1. Instrument d'écriture (81) pour des éléments métachrumatiques à l'eau, instrument d'écriture avec lequel toute image d'écriture souhaitée est formée au moyen d'eau sur un élément métachromatique à l'eau comprenant un support et sur la surface duquel est disposée une couche poreuse formée d'une résine de liaison à laquelle reste fixé de manière dispersée un acide silicique en particules fines, et qui est capable de présenter une transparence différente entre un état où le liquide est absorbé et un état où un liquide n'est pas absorbé ;
ledit instrument d'écriture (81) comprend un support (83) qui maintient un stylet (82) formé d'un élément poreux en résine synthétique ou d'un élément usiné fibreux, et un conteneur (86) capable de contenir l'eau directement à l'intérieur ; et
une ouverture de versement à partir de laquelle on verse de l'eau dans le conteneur et qui est pratiquée à l'extrémité avant du conteneur, et ledit support étant construit de façon à être emboîté de manière détachable dans l'ouverture de versement ; ledit instrument d'écriture étant **caractérisé en ce que**
l'intérieur dudit conteneur (86) est fermé hermétiquement lorsque ledit support est emboîté dans ladite ouverture de versement ; ledit support comprenant un élément cylindrique de support de stylet (85) capable de supporter le stylet (82) sur sa surface extérieure ;
ledit élément cylindrique (85) de support de stylet étant inséré depuis ladite ouverture de versement et étant disposé dans ledit conteneur,
et un espacement (88) étant disposé entre la surface extérieure dudit stylet (82) et la surface intérieure dudit élément de support (85) de stylet, l'espacement étant un espacement à travers lequel l'intérieur dudit conteneur communique avec l'extérieur dudit conteneur et dans lequel l'eau est maintenue à l'aide d'une force de capillarité.

2. Instrument d'écriture pour des éléments métachromatiques au contact de l'eau selon la revendication 1, dans lequel la largeur de l'espacement (88) dans la direction du diamètre est fixée pour diminuer progressivement vers l'extrémité arrière du conteneur.
